(19) Europäisches Patentamt
European Patent Office
Office européen des brevets

(11) **EP 2 315 093 A1**

(12) **EUROPÄISCHE PATENTANMELDUNG**

(43) Veröffentlichungstag:
**27.04.2011 Patentblatt 2011/17**

(51) Int Cl.:
*G05B 19/416* (2006.01)   *B25J 9/16* (2006.01)

(21) Anmeldenummer: **10010212.8**

(22) Anmeldetag: **22.09.2010**

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**BA ME RS**

(30) Priorität: **13.10.2009   DE 102009049172**

(71) Anmelder: **KUKA Laboratories GmbH**
**86165 Augsburg (DE)**

(72) Erfinder:
• **Aurnhammer, Andreas, Dr.**
**81929 München (DE)**

• **Burkhart, Stefan**
**89407 Dillingen (DE)**
• **Hüttenhofer, Manfred**
**86405 Meitingen (DE)**
• **Weiß, Martin, Dr.**
**86459 Margertshausen (DE)**

(74) Vertreter: **Schlotter, Alexander Carolus Paul**
**Wallinger Ricker Schlotter Foerstl**
**Patent- und Rechtsanwälte**
**Zweibrückenstrasse 5-7**
**80331 München (DE)**

(54) **Verfahren und Vorrichtung zur Steuerung eines Manipulators**

(57)   Ein erfindungsgemäßes Verfahren zur Steuerung eines Manipulators, insbesondere eines Roboters umfasst die Schritte:
Bestimmen (S10, S20) einer Soll-Bahn (q(s)) des Manipulators;
Bestimmen (S70) einer Bewegungsgröße (v(s)) für diese Soll-Bahn;
wahlweise, Bestimmen (S50) eines Bahnabschnitts ([s_A, s_E]) mit einem vorgegebenen Verlauf einer Bewegungsgröße (v(s) = vc), und automatisches Bestimmen (S60) dieser Bewegungsgröße auf Basis in diesem Bahnabschnitt zulässiger Bewegungsgrößen (v_max_RB, v_max_vg)..

Fig. 1

EP 2 315 093 A1

**Beschreibung**

Die vorliegende Erfindung betrifft ein Verfahren und eine Vorrichtung zur Steuerung eines Manipulators, insbesondere eines Roboters, wobei eine Soll-Bahn des Manipulators und eine Bewegungsgröße für diese Soll-Bahn bestimmt werden.

Insbesondere bei Industrierobotern ist es, beispielsweise aus der EP 1 117 020 B1, bekannt, eine Soll-Bahn als Abfolgen anzufahrender Roboterposen durch Teachen oder offline-Programmierung vorzugeben, die durch Spline-Funktionen, i.e. bereichsweise definierte Polynome interpoliert werden.

Beispielsweise aus F. Pfeiffer, E. Reithmeier, "Roboterdynamik", Teubner 1987, ist ein Verfahren bekannt, für eine solche Soll-Bahn auf Basis eines dynamischen Modells des Roboters unter Einhaltung von Restriktionen für Achs- oder TCP-Geschwindigkeiten und Motormomenten ein optimales Geschwindigkeitsprofil zu bestimmen. Insbesondere wird ein effizientes Verfahren zur Bestimmung zeitoptimaler Geschwindigkeitsprofile beschrieben, unter denen der Roboter die vorgegebenen Soll-Bahn unter Ausnutzung seiner Antriebsbeschränkungen und unter Einhaltung einer Obergrenze für die kartesische Geschwindigkeit seines TCPs so schnell wie möglich abfährt.

Andererseits erfordern manche Arbeitsprozesse die Vorgabe eines Geschwindigkeitsprofils längs der Soll-Bahn. Soll beispielsweise ein Roboter mittels einer Klebepistole mit konstanter Klebemittelabgabe Klebemittel gleichmäßig auftragen, erfordert dies ein Abfahren der geplanten Klebebahn mit konstanter Geschwindigkeit. Bei der manuellen Wahl dieser konstanten Geschwindigkeit wird jedoch das Potential des Roboters in der Regel nicht ausgenutzt.

Aufgabe der vorliegenden Erfindung ist es daher, die Steuerung eines Manipulators zu verbessern.

Zur Lösung dieser Aufgabe ist ein Verfahren nach dem Oberbegriff des Anspruchs 1 durch dessen kennzeichnende Merkmale weitergebildet. Anspruch 12 stellt eine Vorrichtung zur Durchführung eines erfindungsgemäßen Verfahrens, die Ansprüche 13, 14 ein entsprechendes Computerprogramm bzw. Computerprogrammprodukt, insbesondere einen Datenträger bzw. ein Speichermedium, unter Schutz.

Zur Steuerung eines Manipulators, insbesondere eines Roboters wird erfindungsgemäß eine Soll-Bahn des Manipulators bestimmt. Hierzu können beispielsweise im Arbeitsraum Positionen, i.e. Lagen und/oder Orientierungen eines manipulatorfesten Referenzpunktes bzw. -systems, insbesondere des Werkzeugreferenzsystems ("Tool Center Point" TCP), und/oder im Gelenkkoordinatenraum ("Configuration Space") Gelenkkoordinaten, insbesondere Gelenk- bzw. Motorwinkel, durch Anfahren ("teachen") oder offline, beispielsweise auf Basis von Werkstückdaten, etwa der Kontur eines zu bearbeitenden Bauteils, vorgegeben werden, aus denen ein Interpolator die kontinuierliche oder diskretisierte Soll-Bahn, beispielsweise in funktionaler oder Tabellenform generiert. Vorzugsweise wird die Soll-Bahn dabei wenigstens bereichsweise auf Basis von Spline-Funktionen bestimmt, wodurch mehrfach stetige Übergänge mit entsprechend geringen Schwingungsanregungen erreicht werden können. Gleichermaßen kann die Soll-Bahn auch direkt durch Offline-Programmierung, etwa durch die Vorgabe entsprechender, über einen Bahnparameter parametrisierter, Funktionen im Arbeits- und/oder Gelenkkoordinatenraum bestimmt werden.

Für diese Soll-Bahn werden vorab oder im Betrieb eine oder mehrere Bewegungsgrößen bestimmt. Eine Bewegungsgröße kann insbesondere eine Geschwindigkeit, Beschleunigung und/oder höhere Ableitung des Referenzpunktes bzw. -systems und/oder einer oder mehrerer Bewegungsachsen des Manipulators nach der Zeit umfassen. So kann insbesondere ein Geschwindigkeitsprofil längs der Soll-Bahn vorgegeben werden, das eine Manipulatorsteuerung dann durch eine entsprechende getaktete Vorschubregelung oder dergleichen umsetzen kann. Aufgrund des integralen bzw. differenziellen Zusammenhangs kann gleichermaßen auch ein Beschleunigungsprofil oder Ruckprofil, i.e. der Verlauf der dritten Ableitung der Koordinaten nach der Zeit, vorgegeben werden, wenn dies beispielsweise für den abzuarbeitenden Prozess geeigneter ist.

Erfindungsgemäß werden dabei nun wahlweise ein oder auch mehrere Bahnabschnitte mit einem jeweils vorgegebenen Verlauf einer Bewegungsgröße bestimmt und diese Bewegungsgröße auf Basis in diesem Bahnabschnitt zulässiger Bewegungsgrößen automatisch bestimmt. Auf diese Weise kann der Manipulator gleichermaßen beispielsweise den gewünschten Geschwindigkeitsverlauf realisieren und dabei andererseits Restriktionen wie maximal zulässige TCP- oder Achsgeschwindigkeiten, Drehmomentbegrenzungen und dergleichen einhalten.

Der vorgegebene Verlauf der Bewegungsgröße wird vorzugsweise qualitativ bestimmt. Er kann beispielsweise linear, insbesondere konstant sein. So kann beispielsweise für einen bestimmten Bahnabschnitt vorgegeben werden, dass die Geschwindigkeit oder Beschleunigung des TCPs in dem entsprechenden Bahnabschnitt konstant sein oder linear steigen bzw. fallen soll.

Dann wird diese Bewegungsgröße automatisch quantitativ so bestimmt, dass gewisse zulässige Bewegungsgrößen, beispielsweise zulässige TCP- und/oder Achsgeschwindigkeiten und/oder -beschleunigungen, Antriebsdrehmomente oder dergleichen nicht über- bzw. unterschritten werden. Insbesondere kann die automatisch bestimmte Bewegungsgröße ein Extremum, i.e. Minimum oder Maximum der innerhalb des Bahnabschnittes zulässigen Bewegungsgrößen sein und hierzu beispielsweise auf Basis des Minimums von in dem Bahnabschnitt maximal zulässigen Bewegungsgrößen und/oder des Maximums von in dem Bahnabschnitt minimal zulässigen Bewegungsgrößen bestimmt werden.

Beispielsweise können maximale Achsgeschwindigkeiten-, beschleunigungen, -rucke oder dergleichen für die einzelnen Achsen vorgegeben sein. Dann kann anhand eines kinematischen Modells auf Basis dieser zulässigen Bewegungsgrößen jeweils eine maximale zulässige kartesische TCP-Geschwindigkeit bestimmt werden. Zusätzlich oder alternativ können maximale Antriebs-, i.e. Motor- und/oder Getriebemomente oder dergleichen für die einzelnen Achsen vorgegeben sein. Dann kann anhand eines dynamischen Modells auf Basis dieser zulässigen Bewegungsgrößen jeweils eine maximale zulässige kartesische TCP-Beschleunigung bestimmt werden.

Wird nun beispielsweise für einen Bahnabschnitt vorgegeben, dass die Geschwindigkeit dort konstant sein soll, kann ein Optimierer die kleinste der vorstehend erläuterten maximal zulässigen TCP-Geschwindigkeiten bzw. die kleinste der mit den vorstehend erläuterten maximal zulässigen TCP-Beschleunigungen erreichbare TCP-Geschwindigkeit als automatisch bestimmte Geschwindigkeit ermitteln. Der Manipulator fährt dann in dem gewählten Bahnabschnitt mit der maximalen konstanten Geschwindigkeit, die aufgrund aller Restriktionen bezüglich der Antriebsgeschwindigkeiten, -beschleunigungen, -drehmomente etc. zulässig ist.

Die für die Soll-Bahn bestimmte Bewegungsgröße, die Bewegungsgröße, deren Verlauf vorgegeben wird, und/ oder bei deren automatischer Bestimmung berücksichtigte zulässige Bewegungsgrößen können dieselben Größen umfassen. Beispielsweise kann für einen Bahnabschnitt qualitativ ein konstanter TCP-Geschwindigkeitsverlauf vorgegeben werden, die konstante Geschwindigkeit quantitativ auf Basis der in diesem Abschnitt maximal zulässigen TCP-Geschwindigkeiten automatisch bestimmt werden, und auf Basis dieser maximalen konstanten TCP-Geschwindigkeit das TCP-Geschwindigkeitsprofil längs der Soll-Bahn vorgegeben werden.

Gleichermaßen können zwei oder drei der genannten Bewegungsgrößen auch unterschiedliche Größen umfassen. So kann zum Beispiel für einen Bahnabschnitt qualitativ ein konstanter TCP-Geschwindigkeitsverlauf vorgegeben werden, die konstante Geschwindigkeit jedoch quantitativ auf Basis der in diesem Abschnitt maximal zulässigen Achsbeschleunigungen automatisch bestimmt werden, und auf Basis dieser maximalen konstanten TCP-Geschwindigkeit dann das Achsgeschwindigkeitsprofil längs der Soll-Bahn vorgegeben werden.

Als dynamisches Modell des Manipulators wird insbesondere dessen mathematische Beschreibung in Form von Bewegungsgleichungen, etwa für die Gelenkkoordinaten $q$ in der Form $\mathbf{M}d^2q/dt^2 + h(q, dq/dt) = \tau$ mit der Massenmatrix $\mathbf{M}$, dem Kraftvektor $h$ und dem Vektor der Antriebsmomente $\tau$ bezeichnet. Es umfasst insbesondere ein kinematisches Modell des Manipulators, dass beispielsweise die Position des TCPs in Abhängigkeit von den Gelenkkoordinaten $q$ bzw. einem Bahnparameter s beschreibt.

In einer bevorzugten Ausführung kann ein Bahnabschnitt durch Punkte der Sollbahn vorgegeben werden, wobei vorzugsweise Offsets gegenüber diesem Punkten vorgegeben werden können. Wird beispielsweise eine Klebebahn durch Anfangs- und Endpositionen im Arbeitsraum definiert, kann durch diese Punkte, vorzugsweise unter Berücksichtigung eines Offsets längs der Klebebahn, der Abschnitt der Klebebahn vorgegeben werden, in dem der TCP mit konstanter Geschwindigkeit verfahren soll, um einen gleichmäßigen Klebemittelauftrag zu gewährleisten. Die Eingabe des Bahnabschnittes kann somit sowohl die Information, dass ein Bewegungsgrößenverlauf vorgegeben ist, als auch die Information, wo sich dieser Verlauf erstrecken soll, umfassen.

Aufgrund der erfindungsgemäß bei der automatischen Bestimmung der Bewegungsgröße berücksichtigten zulässigen Bewegungsgrößen kann es vorkommen, dass die automatisch bestimmte Bewegungsgröße einen gewünschten quantitativen Wert nicht erreicht. So kann beispielsweise ein Benutzer wünschen, dass der Manipulator in Bereichen, für die er eine konstante TCP-Geschwindigkeit vorgibt, stets mit der maximal zulässigen Geschwindigkeit, beispielsweise 250 mm/s fährt. Dies ist aber aufgrund von Antriebsbeschränkungen teilweise nicht möglich. Erfindungsgemäß wird dann beispielsweise die maximal zulässige konstante Geschwindigkeit bestimmt. Dann kann es vorteilhaft sein, den Anwender darüber zu informieren, dass in dem Bahnabschnitt die automatisch bestimmte konstante Geschwindigkeit von der vorgegebenen maximalen Geschwindigkeit abweicht. Vorzugsweise erfolgt diese Ausgabe nur wahlweise, beispielsweise nur in einem Einrichtebetrieb, da dies im Automatikbetrieb keinen Fehler darstellt, sondern bewusst mit der aufgrund von Restriktionen hier maximal noch möglichen konstanten Geschwindigkeit gefahren wird.

Zusätzlich oder alternativ zur Ermittlung einer minimalen oder maximalen Bewegungsgröße innerhalb des Bahnabschnittes kann die Bewegungsgröße für die Soll-Bahn außerhalb des Bahnabschnitts auf Basis zulässiger Bewegungsgrößen optimiert werden. Beispielsweise kann der Manipulator beim Anfahren oder Verlassen einer Klebestrecke mit variablem, zeitoptimalen Geschwindigkeitsprofil fahren.

Weitere Vorteile und Merkmale ergeben sich aus den Unteransprüchen und den Ausführungsbeispielen. Hierzu zeigt, teilweise schematisiert:

Fig. 1:     die Bahngeschwindigkeit v(s) eines gemäß Fig. 2 gesteuerten Roboters; und

Fig. 2:     den Ablauf eines Verfahrens zur Steuerung eines Roboters nach einer Ausführung der vorliegenden Erfindung.

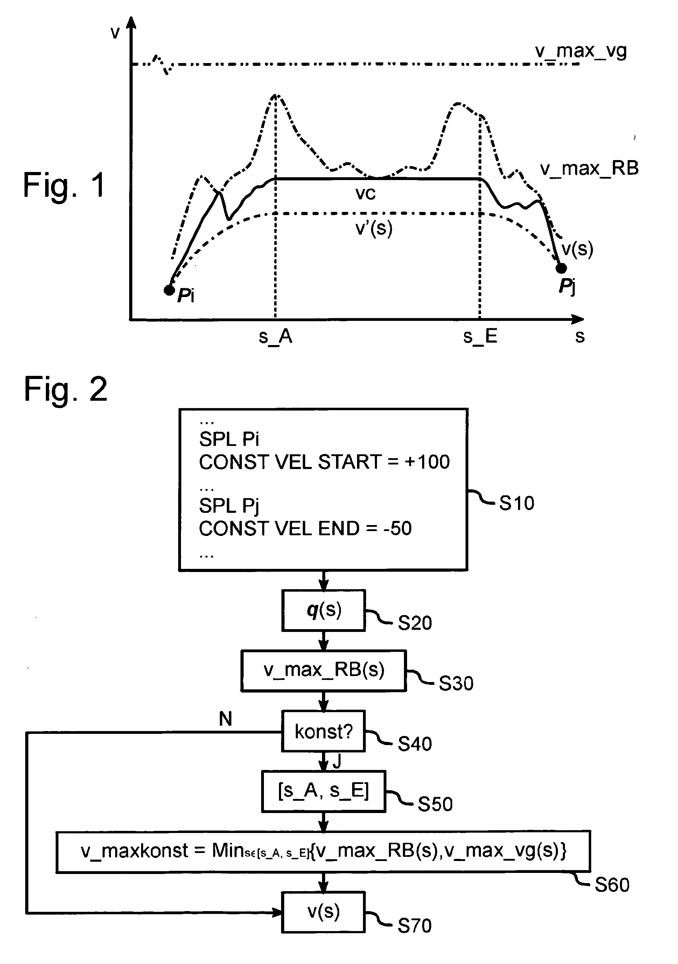

Fig. 2 zeigt den Ablauf eines Verfahrens zur Steuerung eines Roboters (nicht dargestellt) nach einer Ausführung der vorliegenden Erfindung.

In einem ersten Schritt S10 werden, beispielsweise in Form einer Liste mit Anweisungen, verschiedene Roboter-Soll-Positionen $P_i$ vorgegeben, vorliegend etwa als kartesischen Koordinaten $r_i$ und Transformationsmatrizen $T_i$ des TCPs relativ zu einem Bezugssystem wie beispielsweise einem Roboterbasis-Bezugssystem ($P_i = [r_i, T_i]$).

Aus diesen wird in einem Schritt S20 ein Soll-Bahn-Verlauf $q(s)$ generiert, indem beispielsweise die verschiedene Roboter-Soll-Positionen in nicht näher dargestellter Weise durch Spline-Funktionen interpoliert und diese auf Soll-Motorwinkelverläufe $q(s)$ der Antriebsmotoren des Roboters transformiert werden. Die Interpolation kann dabei durch die Anweisungen in der Liste mit den Soll-Positionen vorgegeben werden. So kann beispielsweise die Anweisung "SPL $P_i$" in Fig. 2 angeben, dass der Punkt $P_i$, ausgehend von der vorhergehenden Position $P_{i-1}$, mit einem Spline angefahren werden soll.

Zur Begrenzung der kartesischen Geschwindigkeit des TCPs, beispielsweise auf einen normgerechten Maximalwert von 250 mm/s, kann abschnittsweise oder für die gesamte Bahn eine zulässige Maximalgeschwindigkeit v_max_vg(s) vorgegeben werden, die in Fig. 1 als konstanter Wert strich-doppelpunktiert eingezeichnet ist.

Je nach Pose q des Roboters können andererseits beispielsweise Drehzahlbegrenzungen in den einzelnen Achsen auch zu geringeren zulässigen Geschwindigkeiten des TCPs führen. Anhand eines Dynamik-Modells des Roboters kann für die Bahn daher in einem Schritt S30 Bahnparameterwerten s eine aufgrund von solchen Randbedingungen zulässige Maximalgeschwindigkeit v_max_RB(s) zugeordnet werden. Diese ist in Fig. 1 über dem Bahnparameter s strichpunktiert eingezeichnet und variiert, wie dort ersichtlich, in Abhängigkeit von dem Bahnparameter s.

Soll sich nun der Roboter in einem bestimmten Abschnitt der Bahn mit konstanter kartesischer Geschwindigkeit bewegen, um beispielsweise bei einer robotergeführten Klebepistole mit konstanter Klebemittelabgabe einen gleichbleibenden Klebemittelauftrag zu gewährleisten, kann hierzu in einem Schritt S40, beispielsweise durch entsprechende Anweisungen in der Liste der vorgegebenen Soll-Positionen, eine entsprechende Option aktiviert werden (S40: "J").

Im Ausführungsbeispiel gibt die Anweisung "CONST VEL START=+100" an, dass 100mm nach dem Punkt $P_i$ ein Bereich konstanter Geschwindigkeit beginnen soll, die Anweisung "CONST VEL END= -50" gibt an, dass dieser Bereich 50mm vor dem Punkt $P_j$ enden soll. Hieraus werden in Schritt S50 die in Fig. 1 punktiert eingezeichnete Bahnparameterwerte s_A, s_E ermittelt, die dem gegenüber $P_i$ um 100mm in Abfahrrichtung verschobenen Anfang bzw. dem gegenüber $P_j$ um 50mm entgegen der Abfahrrichtung verschobenen Ende des Abschnitts mit konstanter Geschwindigkeit entsprechen.

Dann wird in Schritt S60 als maximale konstante Geschwindigkeit v_maxkonst für diesen Abschnitt [s_A, s_E] das Minimum aller dort aufgrund von Randbedingungen zulässigen Geschwindigkeiten v_max_RB(s) und aller dort aufgrund von Vorgaben zulässigen Geschwindigkeiten v_max_vg(s) ermittelt:

$$\text{v\_maxkonst} = \text{Min}_{s \in [s\_A,\, s\_E]} \{\text{v\_max\_RB(s)}, \text{v\_max\_vg(s)}\},$$

i.e. der kleinste Wert aller aufgrund von Randbedingungen und von Vorgaben zulässigen Geschwindigkeiten v_max_RB(s_A ≤ s ≤ s_E), v_max_vg(s_A ≤ s ≤ s_E) im gewählten Bahnabschnitt [s_A, s_E]:

$$\text{v\_maxkonst} \leq \text{v\_max\_RB(s)}, \text{v\_max\_vg(s)} \;\forall\; s \in [s\_A, s\_E].$$

Dieser Wert wird als Soll-Geschwindigkeit v(s) für diesen Bahnabschnitt vorgegeben, wenn in Schritt S70 die Geschwindigkeit längs der Bahn bestimmt wird.

Ist für einen Bahnabschnitt die Option nicht aktiviert (S40: "N"), so wird die Soll-Geschwindigkeit v(s) dort beispielsweise durch einen Optimierer bestimmt. Man erkennt in Fig. 1, dass außerhalb des Bereichs [s_A, s_E] die geplante Geschwindigkeit v(s) (ausgezogen in Fig. 1) entsprechend teilweise die zulässigen Grenzwerte v_max_RB erreicht, i.e. dort beispielsweise Antriebsbeschränkungen voll ausgenutzt werden, um etwa den Beginn des Klebeauftrags rasch anzufahren.

Im obigen vereinfachten Ausführungsbeispiel wird zur besseren Veranschaulichung neben der vorgegebenen maximal zulässigen Geschwindigkeit v_max_vg nur die maximal zulässige Geschwindigkeit v_max_RB(s) berücksichtigt, die sich mit der Abhängigkeit der TCP-Geschwindigkeit

$$v = v(q, dq/dt)$$

von den Motorwinkeln q direkt aus den Drehzahlbeschränkungen

$$\frac{dq}{dt} \leq \left(\frac{dq}{dt}\right)_{max}$$

ergibt. In prinzipiell gleicher Weise können auch andere dynamische Randbedingungen berücksichtigt werden. So führen beispielsweise Begrenzungen der Antriebsmomente

$$-\tau_{max} \leq \tau \leq \tau_{max}$$

aufgrund der Beziehung

$$\frac{d^2s}{dt^2} = \frac{1}{2}\frac{d}{ds}\left(\left(\frac{ds}{dt}\right)^2\right)$$

mit dem dynamischen Modell

$$M\frac{d^2q}{dt^2} + h\left(q, \frac{dq}{dt}\right) = \tau$$

des Roboters mit der Massenmatrix $M$ und dem Vektor $h$ der generalisierten Kräfte auf Beschränkungen der Steigung des Verlaufs von v(s). In Abwandlung des obigen Ausführungsbeispiels kann dem beispielsweise dadurch Rechnung getragen werden, dass als maximale konstante Geschwindigkeit v_maxkonst für den Abschnitt [s_A, s_E] die maximale konstante Geschwindigkeit gewählt wird, die zusätzlich die auf Basis des dynamischen Modells auswertbare Randbedingung

$$\left(\frac{dv}{ds}\right)_{min} \leq \frac{dv}{ds} \leq \left(\frac{dv}{ds}\right)_{max} \qquad \forall s$$

erfüllt bzw. die Drehmomentbegrenzungen in den Antriebsmotoren einhält. In Fig. 1 ist hierzu exemplarisch strichdoppelpunktiert ein solcherart geplantes Geschwindigkeitsprofil v'(s) eingezeichnet, bei dem der TCP mit der aufgrund seiner Antriebsdrehmomentbegrenzungen maximalen Beschleunigung in den Bereich konstanter Bahngeschwindigkeit ein- bzw. wieder aus diesem ausfährt, was zu einer Reduzierung der maximalen konstanten Geschwindigkeit in dem Abschnitt [s_A, s_E] führt.

Wird die maximal zulässige Geschwindigkeit v_max_vg, gegebenenfalls bereichsweise, so vorgegeben, dass sie niedriger ist als die aufgrund von Randbedingungen dort maximal zulässige Geschwindigkeit v_max_RB, kann auf einfache Weise eine gewünschte kartesische Soll-Geschwindigkeit direkt vorgegeben werden. Andernfalls fährt der Roboter bei Ausführen der gemäß des Verfahrens nach Fig. 2 geplanten Bewegung dort mit der Geschwindigkeit, die aufgrund der dynamischen Bedingungen, insbesondere Beschränkungen in Antriebsmomenten, - geschwindigkeiten, -beschleunigungen etc. maximal möglich ist.

Bezugszeichenliste

q    Gelenkkoordinaten (z.B. Motor- oder Achswinkel)
s    Bahnparameter
v    Geschwindigkeit (z.B. ds/dt)

**Patentansprüche**

1.  Verfahren zur Steuerung eines Manipulators, insbesondere eines Roboters, mit den Schritten:

    Bestimmen (S10, S20) einer Soll-Bahn ($q$(s)) des Manipulators; und
    Bestimmen (S70) einer Bewegungsgröße (v(s)) für diese Soll-Bahn;
    **gekennzeichnet durch** die Schritte:

    wahlweise, Bestimmen (S50) eines Bahnabschnitts ([s_A, s_E]) mit einem vorgegebenen Verlauf einer Bewegungsgröße (v(s) = vc), und automatisches Bestimmen (S60) dieser Bewegungsgröße auf Basis in diesem Bahnabschnitt zulässiger Bewegungsgrößen (v_max_RB, v_max_vg).

2.  Verfahren nach Anspruch 1, **dadurch gekennzeichnet, dass** eine Bewegungsgröße eine Geschwindigkeit (v), Beschleunigung und/oder höhere Zeitableitung eines Referenzpunktes bzw. Referenzsystems (TCP) und/oder wenigstens einer Bewegungsachse (q) des Manipulators umfasst.

3.  Verfahren nach einem der vorhergehenden Ansprüche, **dadurch gekennzeichnet, dass** der vorgegebene Verlauf der Bewegungsgröße linear, insbesondere konstant ist.

4.  Verfahren nach einem der vorhergehenden Ansprüche, **dadurch gekennzeichnet, dass** als automatisch bestimmte Bewegungsgröße ein Extremum zulässiger Bewegungsgrößen bestimmt wird.

5.  Verfahren nach einem der vorhergehenden Ansprüche, **dadurch gekennzeichnet, dass** die automatisch bestimmte Bewegungsgröße auf Basis des Minimums von in dem Bahnabschnitt maximal zulässigen Bewegungsgrößen und/oder des Maximums von in dem Bahnabschnitt minimal zulässigen Bewegungsgrößen bestimmt wird.

6.  Verfahren nach einem der vorhergehenden Ansprüche, **dadurch gekennzeichnet, dass** in dem Bahnabschnitt zulässige Bewegungsgrößen auf Basis eines kinematischen oder dynamischen Modells

$$\left( M \frac{d^2 q}{dt^2} + h\left( q, \frac{dq}{dt} \right) = \tau \right)$$ des Manipulators bestimmt werden.

7.  Verfahren nach einem der vorhergehenden Ansprüche, **dadurch gekennzeichnet, dass** die Soll-Bahn im Arbeits- und/oder Gelenkkoordinatenraum des Manipulators bestimmt wird.

8.  Verfahren nach einem der vorhergehenden Ansprüche, **dadurch gekennzeichnet, dass** die Soll-Bahn auf Basis von Spline-Funktionen bestimmt wird.

9.  Verfahren nach einem der vorhergehenden Ansprüche, **dadurch gekennzeichnet, dass** der Bahnabschnitt ([s_A, s_E]) auf Basis vorgegebener Punkte ($P$i, $P$j) der Sollbahn bestimmt wird.

10.  Verfahren nach einem der vorhergehenden Ansprüche, **dadurch gekennzeichnet, dass**, insbesondere wahlweise, eine Ausgabe erfolgt, wenn die automatisch bestimmte Bewegungsgröße von einer vorgegebenen Bewegungsgröße abweicht.

11.  Verfahren nach einem der vorhergehenden Ansprüche, **dadurch gekennzeichnet, dass** eine Bewegungsgröße (v(s)) für die Soll-Bahn außerhalb des bestimmten Bahnabschnitts ([s_A, s_E]) auf Basis zulässiger Bewegungsgrößen optimiert wird.

12. Vorrichtung zur Steuerung eines Manipulators, insbesondere einen Roboter, mit:

einer Einrichtung zum Bestimmen einer Soll-Bahn ($q$(s)) des Manipulators; und
einer Einrichtung zum Bestimmen einer Bewegungsgröße (v(s)) für diese Soll-Bahn;
**dadurch gekennzeichnet, dass**
die Einrichtung zum Bestimmen einer Bewegungsgröße für die Soll-Bahn zur Durchführung eines Verfahrens nach einem der vorhergehenden Ansprüche eingerichtet ist.

13. Computerprogramm, das ein Verfahren nach einem der Ansprüche 1 bis 11 ausführt, wenn es in einer Vorrichtung nach Anspruch 12 abläuft.

14. Computerprogrammprodukt mit Programmcode, der auf einem maschinenlesbaren Träger gespeichert ist und ein Computerprogramm nach Anspruch 13 umfasst.

# Fig. 1

# Fig. 2

Europäisches
Patentamt

European
Patent Office

Office européen
des brevets

# EUROPÄISCHER RECHERCHENBERICHT

**Nummer der Anmeldung**

EP 10 01 0212

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2003/014156 A1 (HASHIMOTO ATSUMI [JP] ET AL) 16. Januar 2003 (2003-01-16)<br>* Zusammenfassung *<br>* Absätze [0001] - [0014] *<br>* Absätze [0031], [0036] - [0042] *<br>* Absätze [0049], [0053], [0054] *<br>* Absätze [0059], [0060] *<br>----- | 1-14 | INV.<br>G05B19/416<br>B25J9/16 |
| X | EP 0 507 980 A1 (KAWASAKI HEAVY IND LTD [JP]) 14. Oktober 1992 (1992-10-14)<br>* Zusammenfassung *<br>* Spalte 1, Zeilen 3-18 *<br>* Spalte 1, Zeile 46 - Spalte 2, Zeile 11 *<br>* Spalte 3, Zeile 29 - Spalte 4, Zeile 2 *<br>* Abbildung 1 *<br>----- | 1-14 | |
| X | WO 2008/125656 A1 (SIEMENS AG [DE]; HUANG RUI [DE]; PAPIERNIK WOLFGANG [DE]; WESTERMEYER) 23. Oktober 2008 (2008-10-23)<br>* Zusammenfassung *<br>* Seite 1, Zeilen 1-19 *<br>* Seite 2, Zeilen 25-28 *<br>* Seite 3, Zeilen 12-20 *<br>* Seite 4, Zeilen 7-14 *<br>* Seite 6, Zeilen 1-30 *<br>* Seite 12, Zeilen 23-31 *<br>* Seite 16, Zeilen 1-21 *<br>* Abbildungen 5,7,8 *<br>----- | 1,2,4-14 | RECHERCHIERTE SACHGEBIETE (IPC)<br><br>G05B<br>B25J |

Der vorliegende Recherchenbericht wurde für alle Patentansprüche erstellt

| Recherchenort | Abschlußdatum der Recherche | Prüfer |
|---|---|---|
| München | 19. November 2010 | Dörre, Thorsten |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 10 01 0212

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-11-2010

| Im Recherchenbericht angeführtes Patentdokument | Datum der Veröffentlichung | Mitglied(er) der Patentfamilie | Datum der Veröffentlichung |
|---|---|---|---|
| US 2003014156    A1 | 16-01-2003 | JP    2003001576 A | 08-01-2003 |
| EP 0507980    A1 | 14-10-1992 | CA       2040459 A1<br>US       5293460 A | 16-10-1992<br>08-03-1994 |
| WO 2008125656    A1 | 23-10-2008 | EP       2135143 A1 | 23-12-2009 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1117020 B1

**In der Beschreibung aufgeführte Nicht-Patentliteratur**

- **F. Pfeiffer ; E. Reithmeier.** *Roboterdynamik,* 1987